(19) Europäisches Patentamt
European Patent Office
Office européen des brevets

(11) **EP 2 148 415 B1**

(12) **EUROPÄISCHE PATENTSCHRIFT**

(45) Veröffentlichungstag und Bekanntmachung des Hinweises auf die Patenterteilung:
**27.02.2013 Patentblatt 2013/09**

(51) Int Cl.:
***H02M 1/14*** *(2006.01)*

(21) Anmeldenummer: **09164648.9**

(22) Anmeldetag: **06.07.2009**

(54) **Verfahren zur Minimierung der Grundschwingungsamplitude des Quellenstroms bei Mehrkonvertersystemen**

Method for minimising the amplitude of the fundamental oscillation of the source current source in multiple converter systems

Procédé de minimisation de l'amplitude des vibrations fondamentales du courant de source dans des systèmes à plusieurs convertisseurs

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **25.07.2008 DE 102008002971**

(43) Veröffentlichungstag der Anmeldung:
**27.01.2010 Patentblatt 2010/04**

(73) Patentinhaber: **Fohringer, Josef**
**1230 Wien (AT)**

(72) Erfinder:
• **Himmelstoss, Felix**
**2351 Wr. Neudorf (AT)**

• **Fohringer, Josef**
**1230 Wien (AT)**

(56) Entgegenhaltungen:
WO-A-2005/056342    WO-A-2005/064778
US-A- 4 171 517    US-A- 4 779 184
US-A1- 2004 130 302

• **ROBERT L STEIGERWALD ET AL: "Characteristic Input Harmonics of DC-DC Converters and their Effect on Input Filter Design" IEEE TRANSACTIONS ON INDUSTRIAL ELECTRONICS AND CONTROLINSTRUMENTATION,, Bd. IECI-11, Nr. 2, 1. Mai 1981 (1981-05-01), Seiten 73-82, XP011178850 ISSN: 0018-9421**

**Beschreibung**

Die Erfindung betrifft ein Verfahren zur Minimierung der ersten Harmonischen des Quellstroms bei Versorgung von mehreren Konverterstufen mit den Merkmalen des Patentanspruches 1.

Aus US 2004/0123167 A1 ist ein Mehrfach-Konverter System bekannt, bei dem die Schaltzeitpunkte der einzelnen Konverterstufen zueinander versetzt ausgeführt werden. Die Kommunikation der einzelnen Konverter erfolgt über einen Adressbus und einer kombinierten Daten und Synchronisierleitung. Aus dem Taktsignal wird z.B. mit einer phasengekoppelten Schleife die Taktfrequenz des Konverters gewonnen. Die Daten für die Phasenverschiebung werden im einzelnen Konverter in einem Speicher abgelegt. Ziel der Vorrichtung ist es unter anderem eine Reduzierung des Eingangsstromrippels zu erreichen, wenn mehrere Konverter von einer Quelle versorgt werden, und/oder eine Reduzierung des Ausgangsstromrippels wenn mehrere Konverter eine gemeinsame Last versorgen.

Aus US 2002/0001211 A1 ist ein aktives Filter für den Eingang eines Konverters bekannt. Diese Vorrichtung beruht auf einem zuschaltbaren Serienschwingkreis, der auf die Nähe der Schaltfrequenz des Konverters abgestimmt ist. Mit einem weiteren Schalter kann ein ohmscher Widerstand parallel zum Kondensator geschaltet werden. Dadurch wird die Dämpfung des Kreises verändert und damit die Amplitude des Schwingkreisstroms beeinflusst. Außer diesem aktiven Filter wird noch ein passives LC Filter zur Dämpfung der höheren Harmonischen dem Konverter vorgeschaltet. Das hier dargestellte System ist auf Einzelkonverter zugeschnitten.

In WO 2005/056342 A1 werden mehrere pulsweitenmodulierte Konverter zueinander zeitlich (bzw. in der Phase) versetzt angesteuert. Die zeitliche Versetzung geschieht über eine Vorrichtung mit Zählern. Zur Bestimmung der Verschiebung wird mindestens eine der folgenden Messgrößen bzw. Parameter herangezogen: Anzahl der Konverter, aktuelle Pulsweite der Ansteuersignale der Konverter, die aktuelle Leistungsaufnahme der Konverter und der Oberschwingungsgehalt der gemeinsamen Versorgungsleitung. Außerdem wird bei der Ansteuerung auf unterschiedliche Betriebssituationen der Einzelstufen Rücksicht genommen. Die Schaltungsanordnung für eine konkrete Realisierung wird besprochen.

Im Artikel von ROBERT L STEIGERWALD ET AL (Characteristic Input Harmonics of DC-DC Converters and their Effect on Input Filter Design, IEEE Transactions on Industrial Electronics and Control Instrumentation, IECT-28, Nr. 2, Mai 1981, Seiten 73-82) wird das Spektrum des Eingangstroms von Tiefsetzstellern zur Ansteuerung einer Gleichstrommaschine (natürlich sind andere Anwendungen auch möglich) behandelt. Die Kriterien sind dabei die Pulsweite (bzw. das Tastverhältnis), der mittlere Stromwert des Impulses und die Stromänderung während des Impulses. Um auch größere Maschinen anzusteuern, werden Konverterstufen parallel geschaltet und phasenversetzt 360 Grad gebrochen durch die Anzahl der parallel geschalteten Konverterstufen angesteuert.

US 2004/130302 A1 beschreibt ein Mikrocontroller gesteuertes Konvertersystem mit Tiefsetzstellern. Der Mikrocontroller dient zur Erzeugung der erforderlichen Pulsweitensignale der einzelnen Stufen (und weiteren Aufgaben wie Überwachung, Anlauf und ähnlichem). Ein Algorithmus zur Minimierung der Grundschwingung des Gesamteingangsstroms wird dabei nicht angegeben.

In US-A-4 171 517 wird eine Ansteuerstufe zur Erzeugung von Steuerimpulsen aus einem gemeinsamen Oszillator und einem Ringzähler beschrieben. Auch hier wird nicht auf einen Algorithmus zur Minimierung der Grundschwingung des Gesamteingangsstroms eingegangen.

Außerdem kann der umgebende Stand der Technik aus US-A-4 779 184, wo ein Konverterpaar aus zwei Sperrwandlern um exakt 180 Grad phasenverschoben angesteuert wird, wobei zur phasenstarren Ansteuerung eine phasengekoppelte Schleife verwendet wird und WO 2005/064778 A1 in dem mehrere Konverterstufen parallel geschaltet sind und phasenversetzt 360 Grad gebrochen durch die Anzahl der parallel geschalteten Konverterstufen angesteuert sind, entnommen werden.

Mehrkonvertersysteme im Sinne dieser Erfindung entstehen, wenn in einem System mehrere Betriebsspannungen erforderlich sind, die durch je verschiedene Konverterstufen erzeugt werden. Ein typischer Anwendungsfall ist der Betrieb mehrerer Gleichspannungswandler von einem größeren Bufferkondensator (Zwischenkreiskondensator) aus. Um definierte Belastungsverhältnisse der Quelle zu schaffen und um eventuell durch unterschiedliche Betriebsfrequenzen der einzelnen Konverterstufen entstehenden akustischen und elektrischen Schwebungen vorzubeugen, werden die Konverter miteinander synchronisiert.

Eine Minimierung der Grundschwingungsamplitude verringert den (störenden) Effektivwert der Harmonischen des Quellenstroms und erleichtert die Filterung, da nun nur mehr die höheren Harmonischen durch Shuntkondensatoren überbrückt werden müssen.

Der typische Eingangsstrom der Einzelkonverter ist trapezförmig (ein Dreieckstrom kann als spezieller Grenzfall aufgefasst werden). Die Fourieranalyse liefert die Amplitude der Grundschwingung mit dem Tastverhältnis $d$ (Pulsdauer bezogen auf die Periodendauer T), dem Mittelwert des während der Zeit $d \cdot T$ fließenden Stromes bezogen auf die Zeitdauer $d \cdot T$ und dem Stromrippel $\Delta I_L$ gemäß

$$A_{1T} = \frac{1}{\pi} \sqrt{\left[2 \cdot \bar{I}_{dT} \cdot \sin\left(\pi \cdot d\right)\right]^2 + \Delta I_L^2 \cdot \left[\frac{1}{\pi \cdot d} \cdot \sin\left(\pi \cdot d\right) - \cos\left(\pi \cdot d\right)\right]^2} \qquad (1)$$

und die Phasenlage der Grundschwingung gemäß

$$\varphi_{1T} = \arctan\left(\frac{2 \cdot \bar{I}_{dT} \cdot \sin\left(\pi \cdot d\right)}{\Delta I_L \cdot \left[\frac{1}{\pi \cdot d} \cdot \sin\left(\pi \cdot d\right) - \cos\left(\pi \cdot d\right)\right]}\right) - d \cdot \pi \quad . \qquad (2)$$

Der trapezförmige Strom ist typisch z.B. für den Tiefsetzsteller, den Hoch-Tiefsetzsteller und den Sperrwandler. Hat der Konverter eingangsseitig eine Induktivität, z.B. wie beim Hochsetzsteller, wird ein kontinuierlicher Strom aus der Quelle entzogen. Für diesen Fall ergibt sich die Amplitude der Grundschwingung zu

$$A_{1D} = \frac{\Delta I_L}{2 \cdot \pi^2 \cdot d \cdot (1-d)} \sqrt{\left[1 - \cos(2 \cdot \pi \cdot d)\right]^2 + \left[\sin\left(2 \cdot \pi \cdot d\right)\right]^2} \qquad (3)$$

und die Phasenlage der Grundschwingung gemäß

$$\varphi_{1D} = \arctan\left(\frac{1 - \cos(2 \cdot \pi \cdot d)}{\sin\left(2 \cdot \pi \cdot d\right)}\right) - 2 \cdot d \cdot \pi \quad . \qquad (4)$$

Man erkennt, dass die Phasenlage der Grundschwingung immer in Bezug auf den Pulsbeginn phasenverschoben ist. Es sei hier angemerkt, dass die Lage im Quadrantensystem bei der Winkelberechnung zu beachten ist.
Um nun die Gesamtgrundharmonische des Quellenstroms zu minimieren bzw. komplett zu eliminieren, sind die Einschaltzeitpunkte der einzelnen Konverter entsprechend zu wählen. Ist die Amplitude der Grundschwingung eines Konverters größer als die Summe der Grundschwingungen aller anderen Konverter, so ist nur eine Minimierung möglich. Dies geschieht dadurch, dass alle Grundschwingungen der anderen Konverter gegenüber dem Konverter mit der größten Amplitude um 180 Grad phasenverschoben sind. Dazu müssen die Phasenlagen der einzelnen Konverterstufen gemäß (2) oder (4) bestimmt werden und auf 180 Grad in Bezug auf die Phasenlage des größten Stromes ergänzt werden. In allen anderen Fällen muss man aus den Zeigern der Grundschwingungen der Konverter die Phasenverschiebung in Bezug auf eine beliebige Schwingung so bestimmen, dass ein geschlossenes Zeigerdiagramm entsteht.
Das Verfahren ist dann besonders interessant, wenn der Eingangsstrom der einzelnen Konverter diskontinuierlich ist. Es sei aber angemerkt, dass auch bei Konvertern mit kontinuierlichem Eingangsstrom (z.B. Boost, Cuk oder Sepic) es sinnvoll sein kann, die erste Harmonische des Quellenstroms zu eliminieren.
Das Verfahren soll nun anhand einiger Beispiele erläutert werden. Zur weiteren Veranschaulichung sind die Figuren gedacht.
Es zeigt

Figur 1          ein Blockbild des Systems;

Figur 2          den durch Fourieranalyse berechneten Verlauf des Phasenwinkels der Grundschwingung bei trapezförmigem Eingangsstrom in Abhängigkeit des Tastverhältnisses d bei verschiedenen Verhältnissen von , wobei $\Delta I_L$ der Rippelstrom (der Hub zwischen dem Strom am Beginn und am Ende der Leitphase des aktiven Schalters) und $\bar{I}_{dT}$ der nur über die Pulsdauer gemittelte Quellstrom ist;

Figur 3            den Phasenwinkel der Grundschwingung bei dreieckförmigem Eingangsstrom in Abhängigkeit des Tastverhältnisses *d*;

Figuren 4 bis 6    an Hand von Stromverläufen und Zeigerdiagrammen die praktische Durchführung des Verfahrens bei drei Konvertern;

Figur 7            das geschlossene Zeigerdiagramm (Summe der Ströme ist gleich null) beispielhaft für zwei Möglichkeiten bei vier Konverterstufen, die von der selben Quelle versorgt werden.

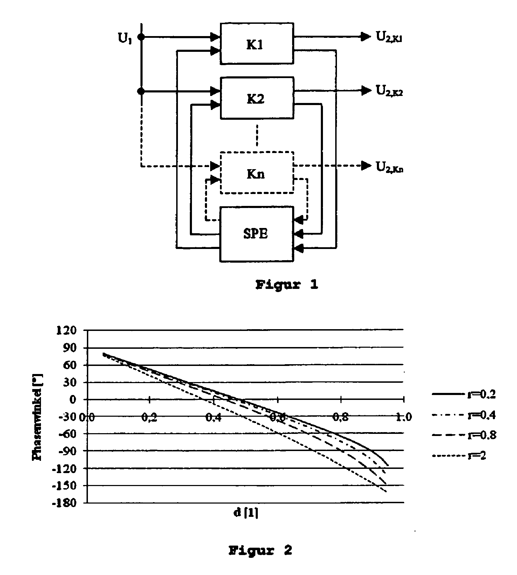

Figur 1 zeigt das Blockbild, bestehend aus einem Versorgungsbus ($U_1$), von dem mehrere Konverterstufen (K1), (K2), ..(Kn) versorgt werden. Die Synchronisier- und Phasenverschiebereinheit (SPE) erhält einerseits Information von den Konvertern und legt die Arbeitsfrequenz und die Einschaltzeitpunkte der aktiven Schalter der einzelnen Konverter (K1), (K2), ..(Kn) fest.

Bei zwei Konvertern ist es klar, dass eine größtmögliche Reduktion der Grundschwingung des Quellstroms nur auftreten kann, wenn die beiden Zeiger zueinander um 180 Grad phasenverschoben sind. Konverter 1 liefert eine Grundschwingungsamplitude $I_1$ mit der Phase $\varphi_1$ und Konverter 2 liefert eine Grundschwingungsamplitude $I_2$ mit der Phase $\varphi_2$. Man muss nun den Einschaltzeitpunkt des aktiven Schalters des zweiten Konverters um die Phase $\Delta\varphi = \varphi_1 - \varphi_2 - 180°$ verschieben. Auf die gleiche Weise kann man die Phasenverschiebungen bei Systemen mit mehreren Konvertern bestimmen, wenn ein Konverter mehr Grundschwingungsstrom liefert als alle anderen zusammen. Der Konverter n muss daher mit einem Phasenwinkel von $\Delta\varphi_n = \varphi_1 - \varphi_n - 180°$ verschoben angesteuert werden.

Bei drei Konvertern können die erforderlichen Winkel über den Kosinussatz berechnet werden, da die drei Zeiger im allgemeinen Fall ein schiefwinkeliges Dreieck bilden. (Wenn ein Strom größer ist als die Summe der beiden anderen, gilt das schon vorher gesagte.)

Figur 2 stellt beispielhaft einen Phasenwinkel der Grundschwingung bei trapezförmigen Eingangsstrom in Abhängigkeit des Tastverhältnisses d bei verschiedenen Verhältnissen von $r = \Delta I_L / \bar{I}_{dT}$ dar.

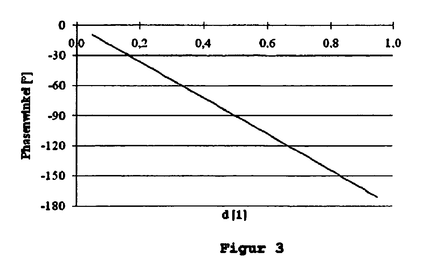

Figur 3 stellt beispielhaft einen Phasenwinkel der Grundschwingung bei dreieckförmigem Eingangsstrom in Abhängigkeit des Tastverhältnisses d dar.

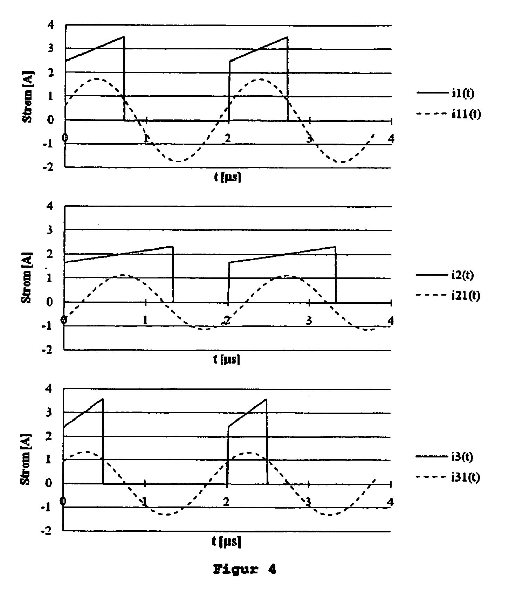

Figur 4 stellt beispielhaft in drei Einzeldiagrammen den Konvertereingangsstrom von drei Tiefsetzstellern und die je zugehörige Grundschwingung (1. Harmonische) dar.

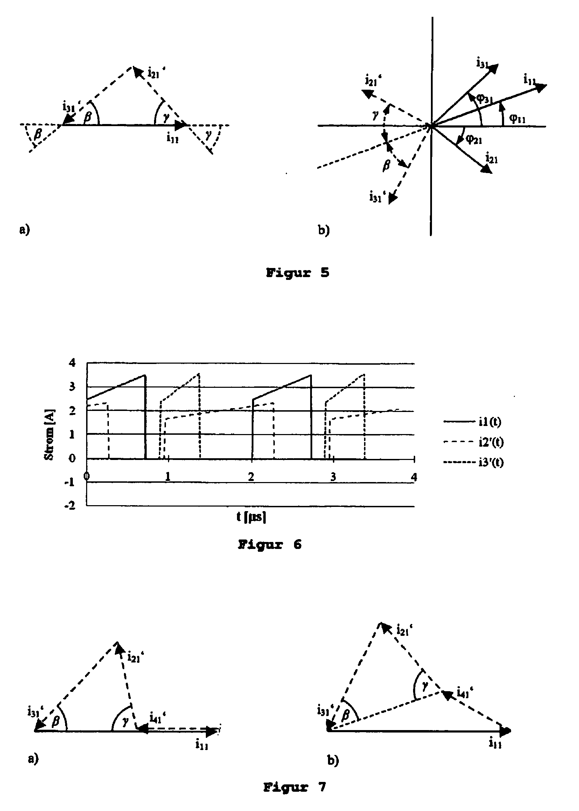

Figur 5 stellt beispielhaft ein geschlossenes Zeigerdiagramm (a) und Zentraldiagramm (b) der Grundschwingungen zu den Konvertereingangsströmen aus Figur 4 dar. Figur 5.a ordnet die drei Grundschwingungsströme zu einem geschlossenen Zeigerdiagramm (Summe der Ströme ist gleich null) an. Die Winkel $\beta, \gamma$ sind die nun zu ermittelnden notwendigen Dreieckwinkel, die zur Berechnung der Phasenlage heranzuziehen sind.

Anschließend werden in Figur 5.b die Zeiger zu einem Zentraldiagramm umgezeichnet. Daraus kann nun leicht die erforderliche Phasenverschiebung der einzelnen trapezförmigen Ströme bestimmt werden.

In Figur 6 sind schließlich die zueinander phasenverschobenen Konverterströme der drei Tiefsetzsteller dargestellt. Je mehr Konverter synchronisiert werden, umso mehr verschiedene Möglichkeiten der Phasenverschiebung gibt es. Bei vier Konvertern ist prinzipiell ein Winkel frei wählbar, die restlichen können dann wieder wie beim dreistufigen Fall zusammengesetzt werden.

Figur 7 stellt beispielhaft die Bildung des geschlossenen Zeigerdiagramms bei vier Konverterstufen bei einer Phasenverschiebung von 180 Grad zwischen zwei Grundschwingungen (a) und bei einer Phasenverschiebung ungleich 180 Grad (b) dar.

Figur 7.a zeigt den Fall, dass zwei Ströme zueinander um 180 Grad verschoben werden und die restlichen Ströme mit der Resultierenden wieder ein Dreieck bilden.

Figur 7.b zeigt den Fall, dass zwei Ströme zueinander um einen Winkel ungleich 180 Grad verschoben werden, wobei die Resultierende kleiner als die Summe der beiden restlichen Ströme ist, und diese restlichen Ströme mit der Resultierenden wieder ein Dreieck bilden.

Das Problem die Grundharmonische des Quellstroms zu minieren bzw. zu eliminieren wird erfindungsgemäß dadurch erzielt, dass die Amplitude und die Phasenlage der Grundschwingung der einzelnen Konverter bestimmt werden und diese so zu einem Zeigerdiagramm zusammengefügt werden, dass ein geschlossenes Zeigerdiagramm entsteht oder der resultierende Zeiger minimal wird und daraus die erforderliche Phasenverschiebung der Einschaltzeitpunkte der einzelnen mit gleicher Schaltfrequenz betriebenen Konverter bestimmt wird (Anspruch 1), oder dass bei zwei Konvertern oder bei mehreren Konvertern, wobei einer eine größere Amplitude der Grundschwingung als alle anderen zusammen hat, diese so versetzt getaktet werden, dass die Phasenverschiebung der Grundschwingungen gegenüber dem Konverter mit dem maximalen Grundschwingungsstrom 180 Grad beträgt (Anspruch 2), oder dass bei drei Konvertern die Phasenverschiebung der Grundschwingung so bestimmt wird, dass aus dem Zeigerdiagramm, das aus der Summe der Grundschwingungsstromzeiger gebildet wird, ein Dreieck entsteht (Anspruch 3), oder dass bei vier Konvertern die Phasenverschiebung der Grundschwingung so bestimmt wird, dass zwei Ströme so versetzt werden, dass deren Resultierende kleiner wird und die restlichen Ströme mit dem Differenzstrom ein Dreieck bilden (Anspruch 4), oder dass bei vier Konvertern die Phasenverschiebung der Grundschwingung so bestimmt wird, dass zwei Ströme 180 Grad phasenverschoben angesetzt werden und dass mit dem Differenzstrom die beiden weiteren Zeiger ein Dreieck bilden (Anspruch 5), oder dass bei fünf oder mehr Konvertern die Phasenverschiebung der Grundschwingung so bestimmt wird, dass zwei Ströme so versetzt werden, dass deren Resultierende kleiner wird, mit dieser Resultierenden wird ein weiterer Stromzeiger verknüpft und die neue Resultierende wird solange mit einem weiteren Stromzeiger verknüpft, bis sich mit den restlichen Zeigern und der letzten Resultierenden ein Dreieck bildet (Anspruch 6).

**Patentansprüche**

1. Verfahren zur Minimierung der ersten Harmonischen des Quellstroms bei der Versorgung von mindestens drei Konvertern (K1 - Kn), wobei die Amplitude und die Phasenlage der Grundschwingung des Eingangstromes (I1 bis In) der einzelnen Konverter (K1 bis Kn) bestimmt werden und diese so zu einem Zeigerdiagramm zusammengefügt werden, dass ein geschlossenes Zeigerdiagramm entsteht oder der resultierende Zeiger minimal wird und daraus die erforderliche Phasenverschiebung der Einschaltzeitpunkte der einzelnen mit gleicher Schaltfrequenz betriebenen Konverter (K1 bis Kn) bestimmt wird, **dadurch gekennzeichnet, dass**

   - bei drei Konvertern (K1, K2, K3) oder bei mehr als drei konvertern (K1 bis Kn), wobei einer der Konverter (K1) eine größere Amplitude der Grundschwingung als alle anderen Konverter (K2 bis Kn) zusammen hat, diese so versetzt getaktet werden, dass die Phasenverschiebung der Grundschwingungen gegenüber dem Konverter (K1) mit dem maximalen Grundschwingungsstrom 180 Grad beträgt oder
   - bei drei Konvertern die Phasenverschiebung der Grundschwingung so bestimmt wird, dass aus dem Zeigerdiagramm, das aus der Summe der Grundschwingungsstromzeiger gebildet wird, ein Dreieck entsteht oder
   - bei vier Konvertern die Phasenverschiebung der Grundschwingung so bestimmt wird, dass zwei Ströme so versetzt werden, dass deren Resultierende kleiner wird und die restlichen Ströme mit dem Differenzstrom ein Dreieck bilden oder
   bei vier Konvertern die Phasenverschiebung der Grundschwingung so bestimmt wird, dass zwei Ströme 180 Grad phasenverschoben angesetzt werden und dass mit dem Differenzstrom die beiden weiteren Zeiger ein Dreieck bilden oder
   - bei fünf oder mehr Konvertern die Phasenverschiebung der Grundschwingung so bestimmt wird, dass zwei Ströme so versetzt werden, dass deren Resultierende kleiner wird; mit dieser Resultierenden wird ein weiterer Stromzeiger verknüpft und die neue Resultierende wird solange mit einem weiteren Stromzeiger verknüpft, bis sich mit den restlichen Zeigern und der letzten Resultierenden ein Dreieck bildet.

**Claims**

1. Procedure for minimising the first harmonic of the source current in the supply of at least three converters (K1 - Kn), whereby the amplitude and the phasing of the fundamental of the input current (I1 to In) of the individual converters (K1 to Kn) are determined and these are combined to form a vector diagram, such that a closed vector diagram results or the resulting vector is minimised and from this the required phase shift of the switch-on points of the individually operated converters (K1 to Kn), which are operated with the same switching frequency, is defined **characterised in that**

   - with three converters (K1, K2, K3) or with more than three converters (K1 to Kn), where one of the converters (K1) has a larger fundamental amplitude than all other converters (K2 to Kn) combined, that these are so clocked in a staggered manner that the phase shift of the fundamentals relative to the converter (K1) with the maximum fundamental current equals 180 degrees or
   - with three converters the phase shift of the fundamental is so defined that from the vector diagram, which is formed from the sum of the fundamental current vectors, a triangle is formed or
   - with four converters the phase shift of the fundamental is so defined that two currents are phase shifted so that their resultant is smaller and the residual currents combined with the differential current form a triangle or
   with four converters the phase shift of the fundamental is so defined that two currents are phase shifted through 180 degrees and that, with the differential current, the two other vectors form a triangle or
   - with five or more converters the phase shift of the fundamental is defined so that two currents are so phase shifted that their resultant is smaller; a further current vector is combined with this resultant and the new resultant is combined with a further current vector until the remaining vectors and the last resultant form a triangle.

**Revendications**

1.  Procédé permettant la minimisation de la première harmonique du courant source lors de l'alimentation de trois convertisseurs (K1 - Kn), au cours duquel l'amplitude et la position de phase de l'oscillation fondamentale du courant d'entrée (I1 à In) de chaque convertisseur (K1 à Kn) sont déterminées et arrangées sous la forme d'un diagramme vectoriel. L'arrangement est tel qu'un diagramme vectoriel fermé est créé, ou bien tel que le vecteur résultant est minimisé, et que le déphasage nécessaire des moments de mise en marche des convertisseurs individuels opérés à fréquences identiques (K1 - Kn) en est déduit. Ce procédé est **<u>caractérisé par le fait</u> que**

    - les trois convertisseurs (K1, K2, K3) ou plus (K1 à Kn) sont cadencés de sorte que le déphasage des oscillations fondamentales soit de 180 degrés par rapport au convertisseur (K1) au courant d'oscillation de base maximum, alors que l'un des convertisseurs (K1) possède une amplitude d'oscillation de base supérieure à celles des autres convertisseurs (K2 à Kn); ou
    - **par le fait que** dans le cas de trois convertisseurs, le déphasage de l'oscillation fondamentale est déterminé de sorte qu'à partir du diagramme vectoriel formé sur la base du total des vecteurs du courant d'oscillation de base, un triangle est formé, ou
    - bien que dans le cas de quatre convertisseurs, le déphasage de l'oscillation fondamentale est déterminé à partir du décalage de deux courants, de sorte que leur résultante diminue et que les courants restants forment un triangle avec le courant différentiel résiduel; ou
    - bien que dans le cas de quatre convertisseurs, le déphasage de l'oscillation fondamentale est déterminé à partir de deux courants déphasés de 180 degrés, lesquels forment un triangle avec le courant différentiel et les deux autres vecteurs; ou
    - bien que dans le cas de cinq convertisseurs ou plus, le déphasage de l'oscillation fondamentale soit déterminé à partir du déphasage de deux courants de sorte que leur résultantes diminuent; un autre vecteur de courant est lié à cette résultante, et la nouvelle résultante est alors liée à un autre vecteur de courant jusqu'à ce qu'un triangle se forme entre les vecteurs restants et la dernière résultante.

**Figur 1**

**Figur 2**

Figur 3

**Figur 4**

a)                                    b)

**Figur 5**

**Figur 6**

a)                                    b)

**Figur 7**

# EP 2 148 415 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040123167 A1
- US 20020001211 A1
- WO 2005056342 A1
- US 2004130302 A1
- US 4171517 A
- US 4779184 A
- WO 2005064778 A1

**In der Beschreibung aufgeführte Nicht-Patentliteratur**

- **ROBERT L STEIGERWALD et al.** Characteristic Input Harmonics of DC-DC Converters and their Effect on Input Filter Design. *IEEE Transactions on Industrial Electronics and Control Instrumentation,* Mai 1981, 73-82